(19) Europäisches Patentamt / European Patent Office / Office européen des brevets

(11) **EP 1 819 098 B1**

(12) **EUROPEAN PATENT SPECIFICATION**

(45) Date of publication and mention
of the grant of the patent:
**03.06.2009 Bulletin 2009/23**

(51) Int Cl.:
*H04L 12/28* (2006.01)   *H04L 25/02* (2006.01)
*H04B 3/48* (2006.01)   *H04M 3/30* (2006.01)

(21) Application number: **06805118.4**

(22) Date of filing: **31.10.2006**

(86) International application number:
**PCT/CN2006/002917**

(87) International publication number:
**WO 2007/059686 (31.05.2007 Gazette 2007/22)**

(54) **METHOD AND DEVICE FOR TESTING TRANSMISSION LOSS OF COMMUNICATION LINE**

VERFAHREN UND EINRICHTUNG ZUM BESTIMMEN DES ÜBERTRAGUNGSVERLUSTES EINER KOMMUNIKATIONSVERBINDUNG

PROCEDE ET DISPOSITIF DESTINES A TESTER LA PERTE DE TRANSMISSION D'UNE LIGNE DE COMMUNICATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.11.2005 CN 200510124056**

(43) Date of publication of application:
**15.08.2007 Bulletin 2007/33**

(73) Proprietor: **Huawei Technologies Co., Ltd.**
**Shenzhen, Guangdong Province 518129 (CN)**

(72) Inventors:
• **JIN, Zhaoguo**
**Shenzhen, Guangdong Province 518129 (CN)**
• **REN, Xiongwei**
**Shenzhen, Guangdong Province 518129 (CN)**
• **XU, Guijin**
**Shenzhen, Guangdong Province 518129 (CN)**
• **HU, Qinghu**
**Shenzhen, Guangdong Province 518129 (CN)**
• **JIA, Ronghua**
**Shenzhen, Guangdong Province 518129 (CN)**

(74) Representative: **Viering, Jentschura & Partner**
**Postfach 22 14 43**
**80504 München (DE)**

(56) References cited:
WO-A-01/01597          CN-A- 1 537 362
US-A1- 2002 089 999    US-A1- 2004 017 849
US-B1- 6 466 647       US-B1- 6 891 887

EP 1 819 098 B1

## Description

### Field

The present invention relates to the communication field, specially to a method and an apparatus for testing data loss in transmission of data communication by modems.

### Background

In the field of telecommunications, using telephone cables, normally twisted pairs operators provide broadband and narrowband telecommunications services, such as Asymmetrical Digital Subscriber Line over Plain Old Telephone Service (simply referred to as ADSL over POTS), Asymmetrical Digital Subscriber Line over Integrated Services Digital Network (simply referred to as ADSL over ISDN), Very High Speed Digital Subscriber Line over Plain Old Telephone Service (simply referred to as VDSL over POTS) and Very High Speed Digital Subscriber Line over Integrated Services Digital Network (simply referred to as VDSL over ISDN). Such applications are popular all over the world.

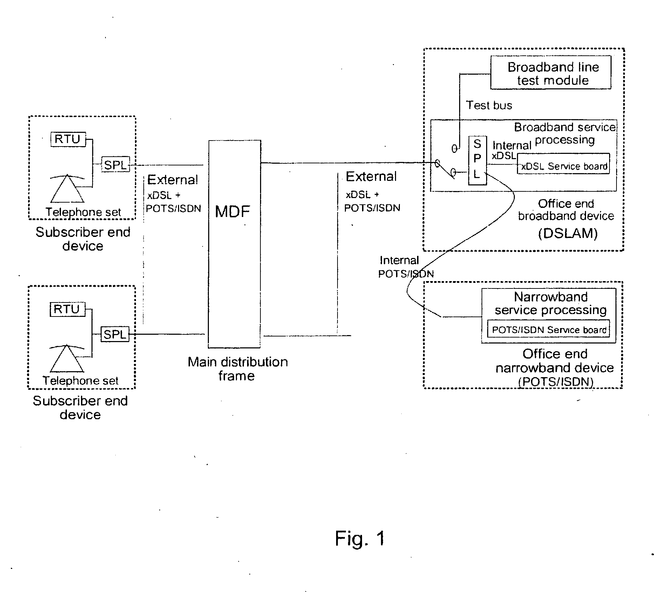

Fig. 1 shows the structure of xDSL (xDSL is the general designation of ADSL and VDSL) over POTS or ISDN in prior arts. The xDSL signal and the signal of POTS or ISDN coexist in an external subscriber line. At central office end, the splitter (simply referred to as SPL) of the Digital Subscriber Line Access Multiplexer (simply referred to as DSLAM) splits broadband and narrowband services and sends them respectively to the xDSL service board and POTS or ISDN service board to process. At the subscriber side, the SPL splits broadband and narrowband services and sends them to the Remote Terminal Unit (simply referred to as RTU) and the telephone set.

In the operation and maintenance of such services, for instance, when a subscriber reports a fault, the operator needs to do various measurements on the subscriber line to judge the line quality and fault status and check whether the subscriber gives a misreport. The broadband line test module shown in Fig. 1 realizes all testing functions. When a subscriber reports an ADSL fault, the operator needs to test the transmission attenuation of the communication line to judge whether the subscriber line is faulty. For instance, if the line is aged, the rate of the ADSL signal might drop to even below the minimum required ADSL rate due to large line attenuation.

At present, the broadband testing unit sends a signal at the central office end to test the line response and then calculates the line transmission loss according to the response. This is Single Ended Loop Test (simply referred to as SELT).

This SELT is based on complex theories and predictable line features, however, frequency response of the line transmission loss is dual ended and the SELT may bring significant errors in the case of unpredictable line features. In addition, the SELF method does not test the transmission loss directly but deduces it theoretically by some basic line parameters. The result may be inaccurate.

[0007]   [0006a] US 2002/0089999 A1 discloses a method for double-ended line qualification and monitoring of xDSL links. This method employs a single test program which is sent by a first subscriber at one end of the xDSL link to a second subscriber at the other end of the xDSL link. Line qualification and/or monitoring is carried out by processing the test program and sending the obtained test results back to the first subscriber. Line qualification and/or monitoring is triggered after the code of the test program has been transmitted by the first subscriber. In this method, the first subscriber represents a modem at the switching end and the second subscriber represents a modem at the subscriber end. The test program is a program module which is connected to other program modules via a message queue.

### Summary

Embodiments disclose a method and an apparatus for testing transmission loss of communication lines.

In one embodiment, a method for testing transmission loss of a communication line includes:

taking samples of voltage signals of handshake carrier signals at a central office end sent by a subscriber modem

calculating transmission loss of a carrier channel corresponding to the subscriber modem according to the samples; and

calculating the transmission loss of other channels of the communication line based on the transmission loss of the carrier channel.

In another embodiment, an apparatus for testing transmission loss of communication lines includes a central processing unit (CPU), an output display unit, a digital signal processor (DSP), a logic unit, a random-access memory (RAM), an analog digital converter (A/D), a filter and an isolator, wherein:

the CPU is adapted to send a test command to the DSP and receive the calculation result from the DSP;

[0015]   [0013a] the output display unit displays the calculation result;

the DSP is adapted to receive the test command and instructs the logic unit to configure sampling parameters;

the logic unit is adapted to control the A/D to start a sampling flow and to control the RAM to store samples;

the isolator is adapted to send an analog handshake carrier signal initiated by a subscriber modem to the filter;

the filter is adapted to filter the analog handshake carrier signal of the subscriber modem and to forward it to the A/D;

the A/D is adapted to take samples of the voltage signal of the analog handshake carrier signal received from the modem under the control of the logic unit, convert the analog handshake carrier signal to a digital signal and send the digital signal to the RAM;

the DSP is adapted to obtain samples stored in the RAM, to calculate frequency response of the transmission loss of the corresponding carrier channel, to calculate frequency response of the transmission loss of other channels of the communication line based on the frequency response of the transmission loss of the carrier channel, and to output by the CPU the calculation result to the output display unit for displaying.

Many benefits may be achieved by way of the embodiments:

(1) The embodiment realizes the dual ended loop test (DELT) on communication lines by testing the handshake carrier signal sent by the subscriber modem, and the real transmission loss of the lines is obtained by the testing. The result is accurate and free of the significant error caused by SELT.

(2) The embodiment provides an apparatus for testing transmission loss of communication lines, making it easy to carry out DELT on communication lines at a low cost.

## Brief Description of the Drawings

Fig. 1 is a schematic diagram illustrating the operator end and subscriber end for xDSL over POTS/ISDN in prior arts.

Fig. 2 is a schematic diagram illustrating DELT on frequency responses of transmission loss according to an embodiment.

Fig. 3 is a schematic diagram illustrating an apparatus for testing transmission loss of communication lines according to an embodiment.

Fig. 4 is a flow chart illustrating a method for DELT on frequency responses of transmission loss by using the modem of a remote ADSL transmission unit according to an embodiment.

Fig. 5 is a chart illustrating the comparing the actual result and the calculated result of the transmission loss of a 0.4-mm line according to an embodiment.

## Detailed Description of Embodiments

The present invention is hereinafter described in detail in conjunction with the embodiments and drawings.

The embodiments are based on ITU-T specifications on data communication: when a device with an ADSL Transmission Unit - Remote (simply referred to as ATU-R) and a device with an ADSL Transmission Unit - Centre (simply referred to as ATU-C) negotiate the signals transmission of ADSL or ADSL2+, modem of the ATU-R and modem of the ATU-C need set up connection by handshake signals to know whether both ends are ready and what coding scheme should be applied for the data transmission. The bandwidth of ADSL2+ signal is 2.208 MHz, including 512 channels, each providing (2.208 MHz / 512 =) 4.3125 kHz bandwidth. When setting up a connection, the modem periodically sends a deterministic carrier signal for handshake communication. This handshake carrier signal is transmitted over channel 9, channel 17 and channel 25. The specifications define the Power Spectral Density (simply referred to as PSD) of the handshake carrier signal, which is sent in successive periods.

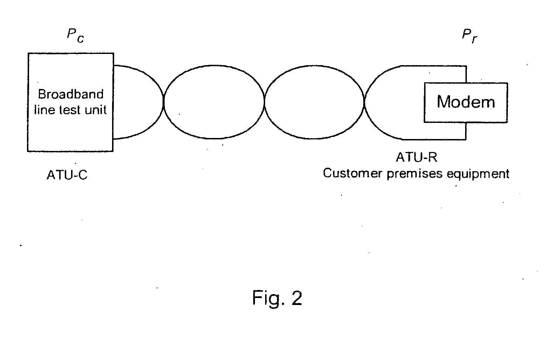

Based on the specifications, an embodiment provides a method for testing transmission loss of communication line, including: taking samples of voltage signals of handshake carrier signals at central office end sent by a subscriber modem; calculating frequency response of the transmission loss of a carrier channel corresponding to the subscriber modem according to the samples; calculating the frequency response of the transmission loss of other channels according to the frequency response of the transmission loss of the carrier channel. Fig. 2 is a general framework diagram of the method.

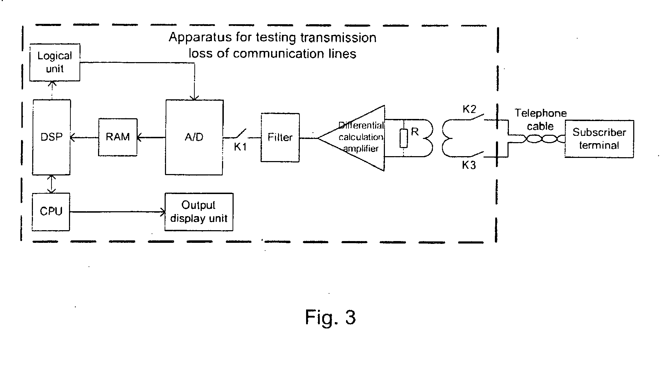

As shown in Fig. 3, to realize the test, an embodiment provides a device for testing transmission loss of communication lines, including:

a logic unit configured to control an Analogue-Digital converter (simply referred to as A/D) to take samples, control a Random-Access Memory (simply referred to as RAM) to store the samples and provide other general logical functions, such as generating a clock signal;

the A/D configured to take samples of voltage signal of the analog handshake carrier signal sent by the subscriber modem, convert the analog voltage signal sampled to a digital signal suitable for the DSP to process, and send the digital signal to the RAM;

the RAM configured to store samples taken by the A/D;

a DSP configured to process the signal , such as doing Fast Fourier Transform (simply referred to as FFT), calculating Power Spectral Density (simply referred to as PSD), and judge power-on status of the modem, etc.;

a CPU configured to send testing commands to the DSP, receive the calculation result of the DSP and send the calculation result on the output display unit;

an output display unit configured to display the calculation result of the DSP, such as waveform, etc.;

an isolator configured to send the analog handshake carrier signal sent by the subscriber modem to a filter. In Fig. 3 the isolator is a transformer;

a differential operation amplifier configured to amplify the analog handshake carrier signal output by the isolator such as a transformer;

the filter configured to filter the analog handshake carrier signal from the modem and send it to the A/D, and provide anti-aliasing filtering for FTT.

As shown in Fig. 3, an impedance matching resistor R and two relay switches K2 and K3 are set between the isolator and the differential operation amplifier, and a relay switch K1 is set between the A/D and the filter.

When receiving the testing command from the CPU, the DSP notifies the logic unit to configure sampling parameters, obtains samples stored in the RAM, calculates frequency response of the transmission loss of the carrier channel corresponding to the modem and frequency response of the transmission loss of other channels of the communication line, and sends the calculation result to the output display unit through the CPU.

With reference to the device for testing the transmission loss of communications lines, the following discloses a method for testing the transmission loss of communications lines according to an embodiment.

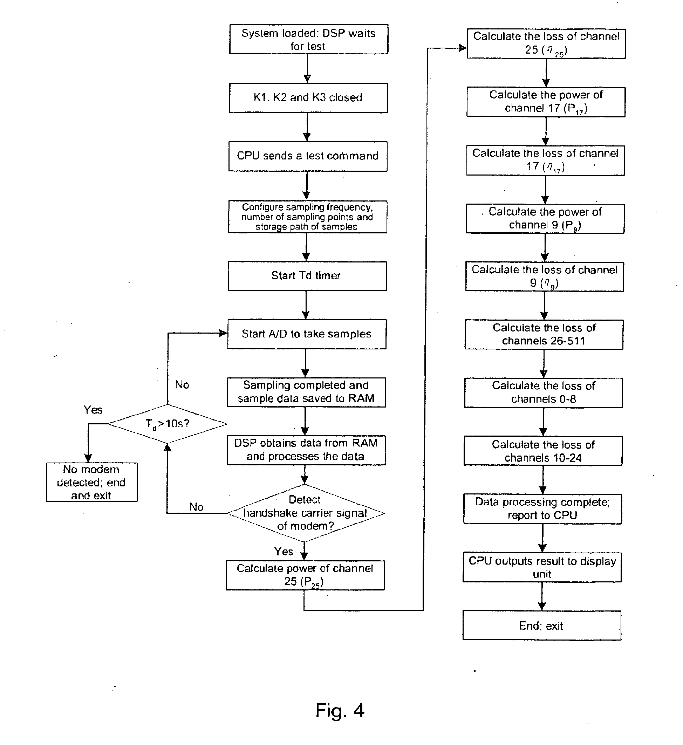

Fig. 4 is a flow chart showing a method for realizing DELT on frequency responses of line frequency responses of transmission loss by an ATU-R modem.

Process 1, the system is powered-on, a CPU and a logic unit, etc are initialized;

Process 2, the CPU detects that a DSP is ready for testing, closes relay switches K1, K2 and K3, and sends a testing command status word to the DSP;

Process 3, the DSP receives the testing command, notifies the logic unit to configure sampling parameters, such as, number of sampling points, sampling frequency and storage path, starts an A/D to take samples and starts the timer. Wherein, the number of sampling points and the sampling frequency may determine total sampling duration.

Process 4, the A/D finishes taking samples and stores the samples in RAM.

Process 5, the DSP keeps monitoring the sampling status of the A/D throughout the sampling process. Once detecting the end of sampling, the DSP takes the sample data from the RAM and saves the data in the cache inside the DSP. The DSP applies FFT on the data to calculate the power (P9, P17 and P25) of the three carriers (channels 9, 17 and 25) of the modem handshake signal.

Process 6, the DSP compares P9, P17 and P25 with the power threshold set for the modem handshake carrier signal over channel 9, channel 17 and channel 25. If the calculated power matches the threshold, that is, larger than or equal to the threshold, the DSP regards that a powered-on modem is detected. According to P9, P17 and P25 the DSP calculates power loss over channel 9, channel 17 and channel 25. According to the power loss over channel 9, channel 17 and channel 25, the DSP deduces the transmission loss of the line over all the 512 ADSL2+ channels. If the calculated power does not match the threshold, that is, smaller than the threshold, the DSP judges whether the total sampling duration is longer than a cycle for sending a handshake signal, the cycle is usually 10 seconds. If the total sampling duration is longer than 10 seconds, the modem is not powered on and no modem is available at the subscriber side. In this case, the DSP terminates the test and displays the status of that the modem is not powered on and no modem is available. If the sampling duration is shorter than 10 seconds, the DSP restarts the A/D to take samples and processes 4-6 are repeated.

The DSP sends the calculation result to the CPU, the CPU sends the result on the output display unit and the whole test process is completed.

In the above procedure for DELT on line frequency responses of transmission loss by an ATU-R modem, samples are taken with a real-time system design. The three key sampling parameters are the sampling duration, sampling frequency and total number of sampling points for each batch of data. The following presents the settings of the three parameters as well as the reasons for settings.

The sampling duration should be longer than or equal to a cycle of a handshake signal, specifically, 232 $\mu$s. Reason for such setting are as follows:

It is known that modem sends a handshake signal at intervals of 10 seconds. In each cycle, the carrier signal of the handshake signal lasts for 3 seconds. The carrier signal of the handshake signal is carried over channels 9, 17 and 25.

Express the modulation frequencies of signals as:

$$\begin{cases} f = \begin{bmatrix} f_0 & f_1 & \cdots & f_n \end{bmatrix} \\ \omega = 2\pi f \end{cases}$$

The time interval becomes:

$$T = \begin{bmatrix} \dfrac{1}{f_0} & \dfrac{1}{f_1} & \cdots & \dfrac{1}{f_n} \end{bmatrix}$$

Express the modulation amplitudes of signals as:

$$A = \begin{bmatrix} a_0 \\ a_1 \\ \vdots \\ a_n \end{bmatrix}$$

To ensure generality, let the initial phase of all signals be 0 and a modulated signal may be expressed as:

$$u_t = \sum_{i=0}^{n} a_i \sin \omega_i t$$

Let the minimum time interval of the modulated signal be expressed as $T_m$, thus:

$$u_{(t+T_m)} = \sum_{i=0}^{n} a_i \sin \omega_i (t + T_m) = \sum_{i=0}^{n} a_i \sin(\omega_i t + 2\pi f_i T_m)$$

wherein,

$$2\pi f_i T_m = k \times 2\pi, k \in N, i = 0,1 \cdots n$$

The above equation becomes:

$$u_{(t+T_m)} = \sum_{i=0}^{n} a_i \sin(\omega_i t + 2\pi f_i T_m) = \sum_{i=0}^{n} a_i \sin \omega_i t = u_t$$

Express the frequency of the modulated signal as:

$$f_m = \frac{1}{T_m}$$

According to the relationship between $T_m$ and $f_i$, the following may be obtained:

$$2\pi f_i T_m = 2\pi f_i \frac{1}{f_m} = k \times 2\pi \Leftrightarrow \frac{f_i}{f_m} = k, k \in N, i = 0,1 \cdots n$$

The above equation shows, to let $T_m$ be the minimum time interval of the modulated signal, $f_m$ should be the greatest common divisor of all modulation frequencies, that is:

$$T_m = \frac{1}{DCG(f_i)}, i = 0,1 \cdots n$$

wherein, $DCG(f_i)$ denotes the greatest common divisor of all modulation frequencies.
For modem carrier signals, the carrier frequencies are distributed over three ADSL channels (channels 9, 17 and 25), whose greatest common divisor is 4312.5. According to the above conclusion, the time interval of the modulated signal determined by the three channels becomes:

$$T = \frac{1}{4312.5} = 232us$$

This means, the sampling duration for each batch of data should not be shorter than 232 $\mu$s.

The sampling frequency is 500 Hz. Reason are as follows:

The modem handshake signal is modulated over channels 9, 17 and 25. Hence, the maximum frequency of the handshake signal is not larger than (25+1) x 4312.5 = 112.125 kHz. According to experiences, 500 Hz is selected.

Total number of sampling points is 1024. Reasons are as follows:

According to the sampling duration and sampling frequency obtained above, as well as the experience that number of, samples from each channel in the sampling duration is not fewer than 5 for each batch of data, the total number of sampling points may be obtained. The total number of sampling points is a major reference for the selection of DSP. It may be obtained as follows:

If the number of sampling points is $N$ and the sampling frequency is $f_s$, the number of samples taken from each channel becomes:

$$m = \frac{4312.5}{f_s} N$$

According to experiences, the number $m$ of the samples taken from each channel should be no fewer than 5. Thus, the following may be obtained:

$$m = \frac{4312.5}{f_s} N \geq 5 \Rightarrow N > 580$$

Considering that the number of sampling points should be a power of 2 for easy generation of the spectrum of time samples and that the smaller this number, the more flexible the selection of DSP will be, thus, the minimum number of sampling points is obtained as 1024.

The number of sampling points satisfies the requirement that the total sampling duration Tp be longer than 232 μs:

$$T_p = \frac{N}{f_s} = \frac{1024}{500000} = 2.048ms > 232us$$

In the above procedure for DELT on line frequency responses of transmission loss by an ATU-R modem, the DSP applies the FFT algorithm to calculate the power and transmission power loss of the ADSL line over channels 9, 17 and 25, and deduces the transmission power loss of other channels according to the transmission power loss over channels 9, 17 and 25. The algorithm and deduction are as follows:

The energy E of a time signal f(t) with limited energy may be expressed as:

$$E = \int_{-\infty}^{+\infty} f(t)^2 dt$$

If the signal is cyclic, in a cycle of T, its power may be expressed as:

$$P = \frac{1}{T} \int_{-\infty}^{\infty} f(t)^2 dt = \frac{1}{T} \cdot \int_{-\infty}^{+\infty} | F(j2\pi f) |^2 df$$

wherein: $f(t)$ is a time denotation of the signal and $F(j2\pi f)$ is the frequency denotation of the signal. If $f(t)$ is a continuous function, $F(j2\pi f)$ may be obtained as:

$$F(j2\pi f) = \int_{-\infty}^{+\infty} f(t).e^{-jwt} dt$$

If $f(t)$ is a sampling sequence of N discrete points $(f(n))$, $F(j2\pi f)$ is also a transformation sequence of N discrete points $(F(n))$. $F(n)$ may be obtained by applying FFT on $f(n)$:

$$F\left(\frac{k}{N} f_s\right) = \sum_{n=0}^{N-1} f_{(n)} e^{-jkn\frac{2\pi}{N}}$$

wherein,

$k = 0,1 \cdots N\text{-}1$, $f_s$ is the sampling frequency and $N$ is the number of sampling points.

Thus, $\dfrac{k}{N} f_s$ is the signal frequency and the sequence position corresponding to ADSL channel 9 is obtained as:

$$9 \times 4312.5 \leq \frac{k}{N} f_s < 10 \times 4312.5 \Rightarrow k_1 \leq k < k_2$$

Thus, the carrier power of the modem handshake signal over ADSL channel 9 may be obtained by adding up the power at each sampling point ($F(k)$) between k1 and k2.

$$P_{Tone\,9} = \frac{1}{T} \cdot \sum_{k=k_1}^{k_2} |F(k)|^2$$

Likewise, the power of the modem handshake signal over ADSL channels 17 and 25 may be obtained:

$$\begin{cases} 17 \times 4312.5 \leq \dfrac{k}{N} f_s < 18 \times 4312.5 \Rightarrow k_1 \leq k < k_2 \\ P_{Tone\,17} = \dfrac{1}{T} \cdot \sum_{k=k_1}^{k_2} |F(k)|^2 \end{cases}$$

$$\begin{cases} 25 \times 4312.5 \leq \dfrac{k}{N} f_s < 26 \times 4312.5 \Rightarrow k_1 \leq k < k_2 \\ P_{Tone\,25} = \dfrac{1}{T} \cdot \sum_{k=k_1}^{k_2} |F(k)|^2 \end{cases}$$

According to the power over channels 9, 17 and 25 calculated above, the power loss of line transmission over channels 9, 17 and 25 is:

$$\begin{cases} dB\eta_9 = dBP_9' - dBP_9 \\ dB\eta_{17} = dBP_{17}' - dBP_{17} \\ dB\eta_{25} = dBP_{25}' - dBP_{25} \end{cases}$$

wherein,

$dB\eta_9$ is the transmission power loss over ADSL channel 9 measured in dB;
$dB\eta_{17}$ is the transmission power loss over ADSL channel 17 measured in dB;
$dB\eta_{25}$ is the transmission power loss over ADSL channel 25, measured in dB;
$dBP_9$ is the power over ADSL channel 9, measured in dBmw, calculated at the ATU-C by samples;
$dBP_9$ is the power of the handshake signal sent by the ATU-R modem over ADSL channel 9, measured in dBmw;
$dBP_{17}$ is the power over ADSL channel 17, measured in dBmw, calculated at the ATU-C by samples;
$dBP_{17}$ is the power of the handshake signal sent by the ATU-R modem over ADSL channel 17, measured in dBmw;
$dBP'_{25}$ is the power over ADSL channel 25, measured in dBmw, calculated at the ATU-C by samples;
$dBP_{25}$ is the power of the handshake signal sent by the ATU-R modem over ADSL channel 25, measured in dBmw.

According to the transmission power loss over ADSL channels 9, 17 and 25 detected and calculated, the transmission power loss of the ADSL2+ signal over all the 512 channels may be deduced. The deduction and reason are as follows:

According to the transmission line equation of a twisted pair, the line transmission loss is:

$$\eta = e^{-\alpha}$$

wherein, $\alpha$ is a loss coefficient, the real part of the twisted pair transmission coefficient $\gamma$.

Between the two wires of the twisted pair in each unit length, if the resistance is R, the inductance is L, the capacitance is C, and the conductance is G, the following may be obtained:

$$\gamma = \alpha + j\beta = \sqrt{(R + j\omega L)(G + j\omega C)}$$

$$Z = \sqrt{\frac{R + j\omega L}{G + j\omega C}}$$

wherein, Z is the feature impedance of the twisted pair. When the frequency is high, it is a real constant.

$$(\alpha + j\beta)Z = \sqrt{(R + j\omega L)(G + j\omega C)}\sqrt{\frac{R + j\omega L}{G + j\omega C}} = R + j\omega L$$

Thus, when the frequency is high, $\alpha$ is:

$$\alpha = \frac{R}{Z} = k\sqrt{f},$$

wherein, $k$ is a real constant.

Thus, frequency response of the transmission loss of the twisted pair measured in dB becomes:

$$dB\eta = 20\log\eta = 20\log e^{-k\sqrt{f}} = -8.686k\sqrt{f}$$

This shows that, when the frequency is high, the transmission loss of a twisted pair measured in dB and the square root of the frequency are in direct proportion. Likewise, when the frequency is low, the transmission loss of a twisted pair measured in dB and the square root of the frequency are in direct proportion.

Thus, the frequency responses of transmission loss of the line from channel 26 to channel 511 may be deduced as:

$$dB\,\eta_m = dB\,\eta_{25}\sqrt{\frac{m}{25}} \qquad m = 26,27 \cdots 511$$

The frequency responses of transmission loss of the line from channel 0 to channel 8 may be obtained as:

$$dB\,\eta_m = dB\,\eta_9\sqrt{\frac{m}{9}} \qquad m = 0,1 \cdots 8$$

Taking $dB\eta_9$, $dB\eta_{17}$, and $dB\eta_{25}$ as known nodes, and using the cubic spline curve method (which is in prior art and will not be described in details herein), a smooth curve of the frequency responses of transmission loss of the line from channel 10 to channel 24 may be created.

Thus, the line frequency responses of transmission loss over all the 512 channels in the entire ADSL2+ band are obtained.

According to embodiments, transmission loss is obtained by calculating the transmission power. In other embodiments of the invention, the line transmission loss may be obtained by calculating the PSD, effective voltage value, or other parameters.

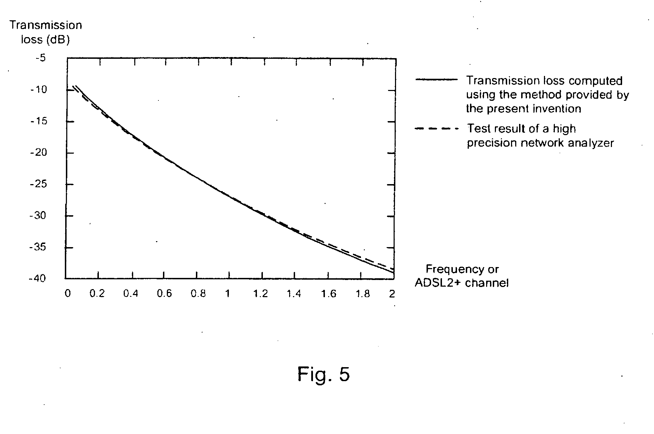

According to embodiments, the actual measurement result of the transmission loss of a 1-km-long twisted pair with a diameter of 0.4 mm is compared with the measurement result of a high precision network analyzer after full dual port calibration, as shown in Fig. 5. The comparison shows that the method according to the embodiment of the invention is of high precision.

To sum up, embodiments realize the real DELT. The real line transmission loss is measured and the result is accurate.

It is understood that the other embodiments will become readily apparent to those skilled in the art from the following detailed description, wherein various embodiments of the invention are shown and described by way of illustration. As will be realized, the invention is capable of modification in various other respects, all without departing from the scope of the present invention. Accordingly, the drawings and detailed description are to be regard as illustrative in nature and not restrictive.

## Claims

1.   A method for testing transmission loss of a communication line, comprising:

   taking samples of voltage signals of handshake carrier signals at a central office end sent by a subscriber modem;
   calculating transmission loss of a carrier channel corresponding to the subscriber modem according to the samples; and
   **characterized by**
   calculating transmission loss of other channels of the communication line based on the transmission loss of the carrier channel.

**2.** The method according to claim 1, wherein the calculating transmission loss of a carrier channel corresponding to the subscriber modem comprises calculating frequency response of the transmission loss of the carrier channel corresponding to the subscriber modem according to the samples;
wherein, the calculating transmission loss of other channels of the communication line comprises calculating frequency responses of the transmission loss of other channels of the communication line according to the calculated frequency response of the transmission loss of the carrier channel corresponding to the subscriber modem.

**3.** The method according to claim 2, wherein total sampling duration of the sampling is longer than or equal to an interval of the subscriber modem sending handshake carrier signals and the sampling duration of each batch of data is longer than or equal to one interval of a handshake carrier signal.

**4.** The method according to claim 1, wherein the calculating transmission loss of the carrier channel corresponding to the subscriber modem according to the samples comprises:

monitoring sampling status; and
obtaining samples upon sampling of one batch of data is completed;
applying FFT on the samples to calculate a transmission parameter value of the carrier channel corresponding to the subscriber modem, the transmission loss of the carrier channel being the difference between the transmission parameter value and a corresponding standard value.

**5.** The method according to claim 4, further comprising:

if the transmission parameter value is smaller than a preset threshold and the sampling duration is shorter than the total sampling duration, taking samples of another batch of data and overwriting the samples taken formerly, otherwise, the sampling process is ended.

**6.** The method according to claim 4, wherein the transmission parameter value is a transmission power value, a power spectral density value or an effective transmission voltage value.

**7.** The method according to claim 2, further comprising:

if transmission loss of an ADSL2+ line is to be tested, calculating frequency responses of transmission loss of the subscriber modem over channel 9, channel 17 and channel 25 of the ADSL2+ line; and
calculating frequency responses of transmission loss of the subscriber modem over channel 26 to channel 511 of the ADSL2+ line according to frequency response of the transmission loss over channel 25 of the ADSL2+ line;
calculating frequency responses of transmission loss over channel 0 to channel 8 of the ADSL2+ line according to frequency response of the transmission loss over channel 9 of the ADSL2+ line;
generating frequency responses of transmission loss over channel 10 to channel 24 of the ADSL2+ line by applying a cubic spline curve method based on the frequency responses of transmission loss of the subscriber modem over channel 9, channel 17 and channel 25 of the ADSL2+ line.

**8.** The method according to claim 7, wherein the calculating frequency responses of transmission loss over channel 26 to channel 511 of the ADSL2+ line comprises:

$$dB\,\eta_m = dB\,\eta_{25}\sqrt{\frac{m}{25}} \qquad m = 26,27 \cdots 511$$

Wherein $dB\eta_{25}$ indicates frequency response of the transmission loss over channel 25 of the ADSL2+ line, measured in dB;
$dB\eta_m$ indicates the frequency responses of transmission loss over channel 26 to channel 511 of the ADSL2+ line, measured in dB; and
the frequency responses of transmission loss over channel 0 to channel 8 of the ADSL2+ line are calculated as follows:

$$dB\,\eta_m = dB\,\eta_9\sqrt{\frac{m}{9}} \qquad m = 0,1\cdots 8$$

wherein $dB\eta_9$ indicates frequency response of the transmission loss over channel 9 of the ADSL2+ line, measured in dB;

$dB\eta_m$ indicates the frequency responses of transmission loss over channel 0 to channel 8 of the ADSL2+ line, measured in dB.

9. An apparatus for testing transmission loss of communication lines, comprising a central processing unit, "CPU", an output display unit, a digital signal processor, "DSP", a logic unit, a random-access memory, "RAM", an analog digital converter, "A/D", a filter and an isolator, wherein:

the CPU is adapted to send a test command to the DSP and to receive the calculation result from the DSP;
the output display unit is adapted to display the calculation result ;
the DSP is adapted to receive the test command and to instruct the logic unit to configure sampling parameters;
the logic unit is adapted to control the A/D to start a sampling flow and to control the RAM to store samples;
the isolator is adapted to send an analog handshake carrier signal initiated by a subscriber modem to the filter;
the filter is adapted to filter the analog handshake carrier signal of the subscriber modem and to forward it to the A/D;
the A/D is adapted to take samples of the voltage signal of the analog handshake carrier signal received from the subscriber modem under the control of the logic unit, to convert the analog handshake carrier signal to a digital signal and to send the digital signal to the RAM; and
the DSP is adapted to obtain samples stored in the RAM, to calculate frequency response of the transmission loss of the corresponding carrier channel, to calculate frequency response of the transmission loss of other channels of the communication line based on the frequency response of the transmission loss of the carrier channel, and output by the CPU the calculation result to the display unit for displaying.

10. The apparatus according to claim 9, further comprising a differential operation amplifier,
wherein the differential operation amplifier is connected between the filter and the isolator and is adapted to amplify the analog handshake carrier signal output by the isolator.

11. The apparatus according to claim 9 or 10, wherein the isolator is a transformer.

**Patentansprüche**

1. Verfahren zum Prüfen des Übertragungsverlustes einer Kommunikationsleitung, aufweisend:

Abtasten von Spannungssignalen von Austausch-Trägersignalen, die von einem Teilnehmermodem gesendet werden, an einem Zentralstellenende,
Berechnen des Übertragungsverlustes eines Trägerkanals, der dem Teilnehmermodem entspricht, gemäß den Abtastwerten, und
**gekennzeichnet durch** das Berechnen des Übertragungsverlustes anderer Kanäle der Kommunikationsleitung auf der Grundlage des Übertragungsverlustes des Trägerkanals.

2. Verfahren gemäß Anspruch 1, wobei das Berechnen des Übertragungsverlustes eines Trägerkanals, der dem Teilnehmermodem entspricht, das Berechnen der Frequenzantwort des Übertragungsverlustes des Trägerkanals, der dem Teilnehmermodem entspricht, gemäß den Abtastwerten aufweist,
wobei das Berechnen des Übertragungsverlustes anderer Kanäle der Kommunikationsleitung das Berechnen von Frequenzantworten des Übertragungsverlustes anderer Kanäle der Kommunikationsleitung gemäß der berechneten Frequenzantwort des Übertragungsverlustes des Trägerkanals, der dem Teilnehmermodem entspricht, aufweist.

3. Verfahren gemäß Anspruch 2, wobei die gesamte Abtastdauer des Abtastens länger als oder gleich einem Intervall des Teilnehmermodems ist, das Austausch-Trägersignale sendet, und wobei die Abtastdauer von jedem Datenstapel länger als oder gleich einem Intervall eines Austausch-Trägersignals ist.

**4.** Verfahren gemäß Anspruch 1, wobei das Berechnen des Übertragungsverlustes des Trägerkanals, der dem Teilnehmermodem entspricht, gemäß den Abtastwerten aufweist:

Überwachen des Abtastzustands,
Erhalten von Abtastwerten, wenn das Abtasten von einem Stapel von Daten beendet ist,
Anwenden einer schnellen FourierTransformation auf die Abtastwerte zum Berechnen eines Übertragungsparameterwertes des Trägerkanals, der dem Teilnehmermodem entspricht, wobei der Übertragungsverlust des Trägerkanals die Differenz zwischen dem Übertragungsparameterwert und einem entsprechenden Standardwert ist.

**5.** Verfahren gemäß Anspruch 4, ferner aufweisend:

wenn der Übertragungsparameterwert kleiner als eine vorbestimmte Schwelle ist und die Abtastdauer kürzer als die gesamte Abtastdauer ist, Abtasten eines anderen Stapels von Daten und Überschreiben der zuvor abgetasteten Werte, wobei andernfalls der Abtastprozess beendet ist.

**6.** Verfahren gemäß Anspruch 4, wobei der Übertragungsparameterwert ein Sendeleistungswert, ein Leistungs-Spektraldichte-Wert oder ein Effektive-Übertragungsspannung-Wert ist.

**7.** Verfahren gemäß Anspruch 2, ferner aufweisend:

wenn der Übertragungsverlust einer ADSL2+-Leitung zu prüfen ist, Berechnen der Frequenzantworten des Übertragungsverlustes des Teilnehmermodems über Kanal 9, Kanal 17 und Kanal 25 der ADSL2+-Leitung, und Berechnen der Frequenzantworten des Übertragungsverlustes des Teilnehmermodems über Kanal 26 bis Kanal 511 der ADSL2+-Leitung gemäß der Frequenzantwort des Übertragungsverlustes über Kanal 25 der ADSL2+-Leitung,
Berechnen der Frequenzantworten des Übertragungsverlustes über Kanal 0 bis Kanal 8 der ADSL2+-Leitung gemäß der Frequenzantwort des Übertragungsverlustes über Kanal 9 der ADSL2+-Leitung,
Erzeugen von Frequenzantworten des Übertragungsverlustes über Kanal 10 bis Kanal 24 der ADSL2+-Leitung durch Anwenden eines Kubische-Spline-Kurve-Verfahrens auf der Grundlage der Frequenzantworten des Übertragungsverlustes des Teilnehmermodems über Kanal 9, Kanal 17 und Kanal 25 der ADSL2+-Leitung.

**8.** Verfahren gemäß Anspruch 7, wobei das Berechnen der Frequenzantworten des Übertragungsverlustes über Kanal 26 bis Kanal 511 der ADSL2+-Leitung aufweist:

$$dB\,\eta_m = dB\,\eta_{25}\,\sqrt{\frac{m}{25}} \qquad \mathtt{m\ =\ 26,\ 27,\ \ldots\ 511}$$

wobei $dB\,\eta_{25}$ die Frequenzantwort des Übertragungsverlustes über Kanal 25 der ADSL2+-Leitung gemessen in dB bezeichnet;
wobei $dB\,\eta_m$ die Frequenzantworten des Übertragungsverlustes über Kanal 26 bis Kanal 511 der ADSL2+-Leitung gemessen in dB bezeichnet, und
wobei die Frequenzantworten des Übertragungsverlustes über Kanal 0 bis Kanal 8 der ADSL2+-Leitung wie folgt berechnet werden:

$$dB\,\eta_m = dB\,\eta_9\,\sqrt{\frac{m}{9}} \qquad \mathtt{m\ =\ 0,\ 1,\ \ldots\ 8}$$

wobei $dB\,\eta_9$ die Frequenzantwort des Übertragungsverlustes über Kanal 9 der ADSL2+-Leitung gemessen in dB bezeichnet,
wobei $dB\,\eta_m$ die Frequenzantworten des Übertragungsverlustes über Kanal 0 bis Kanal 8 der ADSL2+-Leitung gemessen in dB bezeichnet.

**9.** Vorrichtung zum Prüfen des Übertragungsverlustes von Kommunikationsleitungen, aufweisend eine zentrale Verarbeitungseinheit "CPU" [CPU, engl. Central Processing Unit], eine Ausgabe-Anzeige-Einheit, einen digitalen Signalprozessor "DSP" [DSP, engl. Digital Signal Processor], eine Logikeinheit, einen Vielfachzugriffsspeicher "RAM" [RAM, engl. Random Access Memory], einen Analog-Digital-Wandler "A/D", ein Filter und einen Isolator, wobei:

die CPU zum Senden eines Testbefehls an den DSP und zum Empfangen des Rechenergebnisses von dem DSP eingerichtet ist,
die Ausgabe-Anzeige-Einheit zum Anzeigen des Rechenergebnisses eingerichtet ist,
der DSP zum Empfangen des Testbefehls und zum Befehl an die Logikeinheit, Abtastproben-Parameter zu konfigurieren, eingerichtet ist,
die Logikeinheit zum Steuern des A/D zum Starten eines Abtastflusses und zum Steuern des RAM zum Speichern von Abtastproben eingerichtet ist,
der Isolator zum Senden eines von einem Teilnehmermodem initialisierten analogen Austausch-Trägersignals an das Filter eingerichtet ist,
das Filter zum Filtern des analogen Austausch-Trägersignals des Teilnehmermodems und zum Weiterleiten desselben an den A/D eingerichtet ist,
der A/D zum Abtasten des Spannungssignals des von dem Teilnehmermodem empfangenen analogen Austausch-Trägersignals unter der Steuerung der Logikeinheit, zum Umwandeln des analogen Austausch-Trägersignals in ein digitales Signal und zum Senden des digitalen Signals an den RAM eingerichtet ist, und
der DSP zum Erhalten von Abtastproben, die in dem RAM gespeichert sind, zum Berechnen der Frequenzantwort des Übertragungsverlustes des entsprechenden Trägerkanals, zum Berechnen der Frequenzantwort des Übertragungsverlustes anderer Kanäle der Kommunikationsleitung auf der Grundlage der Frequenzantwort des Übertragungsverlustes des Trägerkanals, und zum Ausgeben des Rechenergebnisses durch die CPU an die Anzeigeeinheit zum Anzeigen eingerichtet ist.

**10.** Vorrichtung gemäß Anspruch 9, ferner einen Differenz-Operationsverstärker aufweisend,
wobei der Differenz-Operationsverstärker zwischen dem Filter und dem Isolator angeschlossen und zum Verstärken des analogen Austausch-Trägersignals eingerichtet ist, das von dem Isolator ausgegeben wird.

**11.** Vorrichtung gemäß Anspruch 9 oder 10, wobei der Isolator ein Transformator ist.

**Revendications**

**1.** Procédé destiné à tester une perte de transmission d'une ligne de communication, comprenant les étapes consistant à :

prendre des échantillons de signaux de tension de signaux d'onde porteuse d'établissement de liaison au niveau d'une extrémité de central téléphonique envoyés par un modem d'abonné,
calculer une perte de transmission d'un canal d'onde porteuse correspondant au modem d'abonné selon les échantillons, et
**caractérisé par** l'étape consistant à :

calculer une perte de transmission d'autres canaux de la ligne de communication sur la base de la perte de transmission du canal d'onde porteuse.

**2.** Procédé selon la revendication 1, dans lequel le calcul d'une perte de transmission d'un canal d'onde porteuse correspondant au modem d'abonné comprend le calcul d'une réponse de fréquence de la perte de transmission du canal d'onde porteuse correspondant au modem d'abonné selon les échantillons,
dans lequel, le calcul d'une perte de transmission d'autres canaux de la ligne de communication comprend le calcul de réponses de fréquence de la perte de transmission d'autres canaux de la ligne de communication selon la réponse de fréquence calculée de la perte de transmission du canal d'onde porteuse correspondant au modem d'abonné.

**3.** Procédé selon la revendication 2, dans lequel la durée d'échantillonnage totale de l'échantillonnage est supérieure ou égale à un intervalle du modem d'abonné envoyant des signaux d'ondes porteuses d'établissement de liaison, et la durée échantillonnage de chaque groupe de données est supérieure ou égale à un intervalle d'un signal d'onde porteuse d'établissement de liaison.

**4.** Procédé selon la revendication 1, dans lequel le calcul d'une perte de transmission du canal d'onde porteuse correspondant au modem d'abonné selon les échantillons comprend :

la surveillance d'un statut d'échantillonnage, et
l'obtention d'échantillons lorsque l'échantillonnage d'un groupe de données est terminé,
l'application d'une transformée de Fourier rapide (FFT) sur les échantillons pour calculer une valeur de paramètres de transmission du canal d'onde porteuse correspondant au modem d'abonné, la perte transmission du canal d'onde porteuse étant la différence entre la valeur de paramètre de transmission et une valeur standard correspondante.

**5.** Procédé selon la revendication 4, comprenant en outre :

si la valeur de paramètre de transmission est plus petite qu'un seuil prédéfini, et la durée d'échantillonnage est plus courte que la durée d'échantillonnage totale, la prise d'échantillons d'un autre groupe de données et l'écrasement des échantillons pris auparavant, ou sinon la fin du processus d'échantillonnage.

**6.** Procédé selon la revendication 4, dans lequel la valeur de paramètre de transmission est une valeur de puissance de transmission, une valeur de densité spectrale de puissance ou une valeur de tension de transmission effective.

**7.** Procédé selon la revendication 2, comprenant en outre :

si une perte transmission d'une ligne ADSL2+ doit être testée, le calcul de réponses de fréquence d'une perte de transmission du modem d'abonné sur un canal 9, le canal 17 et le canal 25 de la ligne ADSL2+, et
le calcul de réponses de fréquence d'une perte de transmission du modem d'abonné sur les canaux 26 à 511 de la ligne ADSL2+ selon une réponse de fréquence de la perte de transmission sur le canal 25 de la ligne ADSL2+,
le calcul de réponses de fréquence d'une perte de transmission sur les canaux 0 à 8 de la ligne ADSL2+ selon une réponse de fréquence de la perte de transmission sur le canal 9 de la ligne ADSL2+,
la génération de réponses de fréquence d'une perte de transmission sur les canaux 10 à 24 de la ligne ADSL2+ en appliquant un procédé de courbe spline cubique basé sur les réponses de fréquence d'une perte de transmission du modem d'abonné sur le canal 9, le canal 17 et le canal 25 de la ligne ADSL2+.

**8.** Procédé selon la revendication 7, dans lequel le calcul de réponses de fréquence d'une perte de transmission sur les canaux 26 à 511 de la ligne ADSL2+ comprend :

$$dB\,\eta_m = dB\,\eta_{25}\sqrt{\frac{m}{25}} \qquad\qquad m = 26, 27 \cdots 511$$

où $dB\,\eta_{25}$ indique une réponse de fréquence de la perte de transmis sur le canal 25 de la ligne ADSL2+, mesurée en dB,
$dB\eta_m$ indique les réponses de fréquence d'une perte de transmission sur les canaux 26 à 511 de la ligne ADSL2+, mesurée en dB, et
les réponses de fréquence d'une perte de transmission sur les canaux 0 à 8 de la ligne ADSL2+ sont calculées de la manière suivante :

$$dB\,\eta_m = dB\,\eta_9\sqrt{\frac{m}{9}} \qquad\qquad m = 0, 1 \cdots 8$$

où $dB\eta_9$ indique une réponse de fréquence de la perte de transmission sur le canal 9 de la ligne ADSL2+, mesurée en dB,
$dB\eta_m$ indique les réponses de fréquence d'une perte de transmission sur les canaux 0 à 8 de la ligne ADSL2+, mesurée en dB.

**9.** Appareil destiné à tester une perte de transmission de ligne de communication, comprenant une unité centrale, "CPU", une unité d'affichage de sortie, un processeur de signal numérique, "DSP", une unité de logique, une mémoire vive, "RAM", un convertisseur analogique/numérique, "A/D", un filtre et un isolant, dans lequel :

la CPU est adaptée pour envoyer une commande de test au DSP, et pour recevoir le résultat de calcul du DSP, l'unité d'affichage de sortie est adaptée pour afficher le résultat du calcul,

le DSP est adapté pour recevoir la commande de test et pour charger l'unité de logique afin de configurer des paramètres d'échantillonnage,

l'unité de logique est adaptée pour contrôler le A/D afin de lancer un flux d'échantillonnage et de contrôler la RAM pour stocker des échantillons,

l'isolant est adapté pour envoyer un signal d'onde porteuse d'établissement de liaison analogique initié par un modem d'abonné vers le filtre,

le filtre est adapté pour filtrer le signal d'onde porteuse d'établissement de liaison analogique du modem d'abonné, et pour le transférer vers le A/D,

le A/D est adapté pour prendre des échantillons du signal de tension du signal d'onde porteuse d'établissement de liaison analogique reçu à partir du modem d'abonné sous le contrôle de l'unité de logique, pour convertir le signal d'onde porteuse d'établissement de liaison analogique en un signal numérique, et pour envoyer le signal numérique vers la RAM, et

le DSP est adapté pour obtenir des échantillons stockés dans la RAM, pour calculer une réponse de fréquence de la perte de transmission du canal à onde porteuse correspondant, pour calculer une réponse de fréquence de la perte de transmission d'autres canaux de la ligne de communication sur la base de la réponse de fréquence de la perte de transmission du canal d'onde porteuse, et émettre par l'intermédiaire de la CPU le résultat de calcul sur l'unité d'affichage pour un affichage.

10. Appareil selon la revendication 9, comprenant en outre un amplificateur d'opération différentiel, dans lequel l'amplificateur d'opération différentiel est relié entre le filtre et l'isolant, et est adapté pour amplifier le signal d'onde porteuse d'établissement de liaison analogique émis par l'isolant.

11. Appareil selon la revendication 9 ou 10, dans lequel l'isolant est un transformateur.

Fig. 1

$P_c$

$P_r$

Broadband
line test unit

Modem

ATU-C

ATU-R
Customer premises equipment

Fig. 2

Fig. 3

System loaded: DSP waits
for test

↓

K1. K2 and K3 closed

↓

CPU sends a test command

↓

Configure sampling frequency,
number of sampling points and
storage path of samples

↓

Start Td timer

↓

Start A/D to take samples

↓

Sampling completed and
sample data saved to RAM

↓

DSP obtains data from RAM
and processes the data

↓

Detect
handshake carrier signal
of modem?

No → (loops back)

Yes ↓

Calculate power of channel
25 (P$_{25}$)

$T_d > 10s?$

Yes →

No modem
detected; end
and exit

No → (loops back to Start A/D to take samples)

Calculate the loss of channel
25 ($\eta_{25}$)

↓

Calculate the power of
channel 17 (P$_{17}$)

↓

Calculate the loss of channel
17 ($\eta_{17}$)

↓

Calculate the power of
channel 9 (P$_9$)

↓

Calculate the loss of channel
9 ($\eta_9$)

↓

Calculate the loss of
channels 26-511

↓

Calculate the loss of
channels 0-8

↓

Calculate the loss of
channels 10-24

↓

Data processing complete;
report to CPU

↓

CPU outputs result to display
unit

↓

End; exit

Fig. 4

Fig. 5

**EP 1 819 098 B1**

**REFERENCES CITED IN THE DESCRIPTION**

**Patent documents cited in the description**

• US 20020089999 A1